# FASCICULE DE BREVET EUROPEEN

(11) **EP 2 326 845 B1**
(45) Date de publication et mention de la délivrance du brevet: **17.05.2017**
(21) Numéro de dépôt: 09782545.9
(22) Date de dépôt: 03.09.2009
(51) Int. Cl.: F01D 9/04, F04D 29/02, F04D 29/40, F04D 29/52, F04D 29/54, F01D 25/08, F02C 7/25, F01D 17/16, F01D 25/24

(54) **CARTER DE COMPRESSEUR RÉSISTANT AU FEU DE TITANE, COMPRESSEUR HAUTE PRESSION COMPRENANT UN TEL CARTER ET MOTEUR D'AÉRONEF ÉQUIPÉ D'UN TEL COMPRESSEUR**
GEGEN TITANFEUER BESTÄNDIGES KOMPRESSORGEHÄUSE, HOCHDRUCKKOMPRESSOR MIT SOLCH EINEM GEHÄUSE UND EINEN SOLCHEN KOMPRESSOR ENTHALTENDES FLUGZEUGTRIEBWERK
COMPRESSOR CASING RESISTANT TO TITANIUM FIRE, HIGH PRESSURE COMPRESSOR INCLUDING SUCH A CASING, AND AIRCRAFT ENGINE INCLUDING SUCH A COMPRESSOR

(30) Priorité: 05.09.2008 FR 0855959
(43) Date de publication de la demande: 01.06.2011
(73) Titulaire: Snecma, 75015 Paris (FR)
(72) Inventeur: FERRER, Laurent, F-77125 Lieusaint (FR); MONS, Claude, Marcel, F-77176 Savigny LeTemple (FR)
(74) Mandataire: Ilgart, Jean-Christophe
(86) Numéro de dépôt international: PCT/EP2009/061382
(87) Numéro de publication internationale: WO 2010/026180

(56) Documents cités:
- EP-B1- 0 386 486
- WO-A1-2005/071228
- WO-A1-2008/095463
- US-A- 5 536 022

## Description

### DOMAINE TECHNIQUE

L'invention concerne la réalisation d'un carter de compresseur résistant au feu de titane.

Elle concerne également un compresseur axial haute-pression comprenant un tel carter et un moteur d'aéronef, tel qu'un turboréacteur d'avion équipé d'un tel carter.

### ART ANTÉRIEUR

Dans une turbomachine telle qu'un turboréacteur d'avion, les carters de compresseur haute-pression doivent montrer leur capacité à résister au feu dit « feu de titane ».

Un tel feu de titane provient du fait qu'un frottement non souhaité apparaît entre une pièce mobile, par exemple une aube mobile, en titane du compresseur et une partie fixe en titane du compresseur. Ce frottement non souhaité peut entraîner une surchauffe locale au moins de l'une des parties en contacts : aube mobile ou partie fixe, qui se traduit par une combustion volumique de l'alliage de titane. La température du matériau liquide (titane ou alliage de titane) en combustion peut atteindre les 2700°C soit localement au niveau de la zone de frottement, soit à l'intérieur des particules de titane en combustion qui sont projetées dans la veine du compresseur depuis la zone de frottement. En conséquence, les points de fusion de la matière environnante mise en contact avec le titane liquide sont dépassés, ce qui génère ainsi du combustible à la structure. Ce phénomène est entretenu par des pressions et des débits d'oxygène importants, qui sont rencontrés dès l'entrée de veine pour des compresseurs haute pression modernes. Ainsi, dans le cas de turboréacteurs nouvelles génération nécessitant des fortes pressions à l'entrée du compresseur axial haute-pression, le risque potentiel de frottement pouvant conduire à la combustion de titane existe, par exemple entre la première rangée d'aubes fixes et le bec formé par la partie inférieure des aubes mobiles. Par la suite, les particules en combustion peuvent être projetées dans la veine de compresseur et atteindre le carter externe. Dans le passé, des feux de titane ont été jusqu'à traverser des parois entières de carters avec les conséquences dommageables qui s'en suivent. Ces conséquences sont d'autant plus dommageables que le feu de titane ne peut s'éteindre que de lui-même lors du fonctionnement d'un turboréacteur en fonctionnement.

Pour protéger les carters de compresseur des feux de titane, différentes solutions ont déjà été proposées.

Certaines techniques de protection thermique de carter utilisées sont soit draconiennes (suppression des alliages à base de titane et remplacement par des aciers ou des bases nickel ou d'autres matériaux), soit sophistiquées (mise en places de liners spécifiques sur le carter à base de titane ou d'alliage en titane, protections thermiques réalisées par plasma, traitement des surfaces potentiellement en contact au cours du fonctionnement moteur). On peut citer en tant que couches-liners de protections thermiques les solutions décrites dans les brevets FR 2 560 640 et FR 2 560 641. Quoi qu'il en soit, ces solutions s'avèrent lourdes, encombrantes et parfois limitées dans le temps, c'est-à-dire non compatibles avec les durées de vie de turbomachine, telles qu'un turboréacteur d'avion.

La littérature fait aussi état d'alliages de titane peu combustible, mais de masse volumique plus élevée que celle des alliages standards. Aucun des ces solutions à base d'alliage dit peu combustible n'a réellement été validée aujourd'hui.

Le document WO 2005071228 décrit une solution de liner abradable constitué d'un empilement de couches sur une structure porteuse en titane ou Ti-Al d'une turbine à gaz.

Le brevet US 5536,022 divulgue une solution de joint abradable entre la structure porteuse et les aubes mobiles d'un compresseur de turboréacteur.

Le but de l'invention est alors de proposer une solution qui permette de protéger un carter de compresseur de turbomachine de tout feu de titane susceptible de se produire, tout en conservant en grande partie les avantages du titane ou de ses alliages conventionnels (résistance mécanique importante et faible masse volumique).

### EXPOSÉ DE L'INVENTION

A cet effet, l'invention a pour objet un carter comprenant au moins une partie constituant la structure porteuse de rangées d'aubes fixes et une paroi interne délimitant le contour externe d'une veine de compresseur dans laquelle sont montées en rotation des rangées d'aubes mobiles intercalées individuellement avec les rangées d'aubes fixes ou à calage variable et des moyens de protection thermique contre du titane en combustion caractérisé en ce qu'il comprend sur au moins une partie de sa longueur, en tant que structure porteuse, une pièce monobloc en titane ou alliage de titane et, en tant que moyens de protection thermique, au moins un élément formant bouclier en alliage(s) réfractaire(s) et incombustible au titane en combustion, le(s) bouclier(s) étant solidarisé(s) à la pièce monobloc par des moyens de fixation, ces derniers étant agencés avec le(s) bouclier(s) de manière à définir ensemble la paroi interne délimitant le contour externe de la veine de compresseur.

L'(les) élément(s) formant bouclier(s) au sens de l'invention est (sont) constitué(s) par une ou plusieurs tôles de protection. Le(s) bouclier(s) au sens de l'invention n'est(ne sont) pas un revêtement (couche adhérente) déposé sur la pièce monobloc comme connu dans l'art antérieur. Contrairement à un revêtement, le bouclier selon l'invention est indépendant et distinct de la paroi (structure porteuse.

L'(les) élément(s) formant bouclier(s) peu(ven)t être diverse(s): il peut s'agir notamment de tôle(s) de forme, profilé(s), virole(s) usinée(s) dans un laminé ou d'élément(s) fait(s) à partir de filé roulé soudé.

Ainsi, selon l'invention, on peut utiliser en tant qu'alliage(s) réfractaire(s) et incombustible au titane en combustion des aciers ou des alliages réfractaires déjà existants et qui sont incombustibles au titane en combustion. Ces aciers ou alliages réfractaires sont par ailleurs compatibles thermiquement (compatibilité de traitement thermique et coefficient de dilatation proches) avec le titane ou les alliages à base de titane également déjà existants dans la réalisation de carters de compresseurs, en particulier les compresseurs haute-pression de turboréacteur. On peut utiliser comme alliage(s) réfractaire(s), un alliage à base de nickel ou à base de cobalt.

Selon l'invention, pour réaliser le carter, on assemble les deux types de matières en réalisant une structure mixte (paroi interne délimitant la veine en acier ou alliage(s) réfractaire(s)/structure porteuse en titane ou alliage de titane) sans nuire au fonctionnement du compresseur puisque les moyens de fixation sont agencés pour ne pas modifier le contour de veine et en y intégrant de façon avantageuse les douilles de guidage des aubes à calage variable.

La solution selon l'invention constitue une réponse efficace au feu de titane tout en conservant la majorité de l'avantage intrinsèque du titane, à savoir une faible masse volumique et une résistance mécanique importante, pour la structure porteuse.

Le matériau préféré pour le(s) bouclier(s) en acier ou alliage d'acier est choisi parmi l'acier 17-4 PH, l'acier Z 12 CNDV 12, l'Inconel® 909, l'Inconel® 783 ou l'alliage JETHETE M 152.

Un alliage de titane particulièrement avantageux pour la structure porteuse est choisi parmi le Ti 6 4, Ti 6242 ou Ti 6246.

Selon une variante de réalisation, le carter comprend au moins une couche de matériau anticorrosion intercalée entre chaque bouclier en acier ou en alliage(s) réfractaire(s) et incombustible au titane en combustion et la pièce monobloc en titane ou alliage de titane. Cette couche de matériau anticorrosion peut avantageusement être réalisée par oxydation anodique du titane de la structure porteuse. On évite ainsi les risques de corrosion de l'acier par frottement à l'interface. Cette couche de matériau anticorrosion peut également être complétée par une couche de peinture par exemple à pigment aluminium déposée sur la partie du bouclier en acier ou alliage réfractaire en contact avec la structure porteuse en titane ou alliage de titane.

Selon une variante, un bouclier peut avoir une longueur correspondant à seulement à une partie de la longueur annulaire du carter.

Sur le diamètre interne du bouclier ou en aval de la longueur sur laquelle il est fixé, un matériau d'usure adapté pour définir le contour externe de la veine peut être fixé ou déposé par exemple selon une technique par plasma. Ce matériau d'usure constitue l'abradable face aux aubes mobiles, c'est-à-dire un matériau susceptible d'être arasé ou érodé par le frottement des têtes d'aubes en rotation contre le carter.

Le (s) boucliers(s) en acier ou alliage(s) réfractaire(s) selon l'invention peut (peuvent) avoir, selon une coupe axiale du carter, une forme en T.

Selon un mode de réalisation avantageux, les moyens de fixation comprennent un ou plusieurs bossages à collerette fixé(s) individuellement dans des alésages pratiqués dans la pièce monobloc en titane ou alliage de titane et dans des collerettes alésées pratiquées dans le(s) bouclier(s), la fixation de chaque bossage étant réalisée pour assurer une continuité de surface avec le(s) bouclier(s) afin d'assurer la continuité du contour externe de la veine. En d'autre termes, les bossages sont avantageusement montés de façon à ce que leur collerette prenne appui dans des alésages de même diamètre et qui forment des collerettes pratiquées dans l'épaisseur de la matière du(es) bouclier(s). L'épaisseur des collerettes des bossages peut être de l'ordre de la moitié de l'épaisseur du(es) bouclier(s).

Avantageusement, au moins une partie des bossages est constituée par des douilles de guidage de pivot d'aube à calage variable. Ainsi, il ne sera pas nécessaire, dans des compresseurs munis d'aubes de ce type, d'utiliser des pièces supplémentaires de fixation.

De préférence, les bossages sont des bossages sertis individuellement dans les alésages de la pièce monobloc. De préférence, les bossages sont des bossages sertis à froid. Ils pourront être avantageusement sertis à froid selon le procédé existant FTI 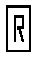 , particulièrement dans le cas des douilles de guidage des aubes à calage variable. Les bossages pourront être réalisés avantageusement dans le même alliage que celui constituant le bouclier. Lorsque les bossages sont constitués en partie par les douilles de guidage d'aubes, ils pourront être par exemple en Hastelloy® X ou en acier A 286 écroui.

Il est envisageable de prévoir des moyens de blocage en translation axiale du(es) bouclier(s) supplémentaires. Avantageusement, ces moyens de blocage en translation axiale supplémentaires peuvent consister en une partie d'une bride de fixation usinée directement dans un autre carter agencé en continuité contre laquelle une partie du(es) bouclier(s) est en butée axiale. Ainsi, on peut se servir avantageusement de la bride de fixation aval du carter intermédiaire, c'est-à-dire celle servant à fixer ce dernier avec le carter du compresseur haute-pression (HP) d'un turboréacteur ou de la bride de fixation amont du carter aval de compresseur HP.

L'invention concerne également un compresseur axial haute-pression comprenant, en tant que stator, un carter tel que défini précédemment.

Selon un mode de réalisation avantageux, la longueur du carter constitue uniquement la partie amont du compresseur, la paroi interne délimitant le contour externe de la veine en aval étant réalisée en titane ou alliage de titane.

L'invention concerne enfin un moteur d'aéronef comprenant un compresseur visé ci-dessus.

### BRÈVE DESCRIPTION DES DESSINS

D'autres caractéristiques et avantages de l'invention ressortiront mieux à la lecture de la description détaillée ci-dessous faite en référence aux figures suivantes parmi lesquelles :
- la figure 1 est une vue en coupe longitudinale d'un compresseur axial haute-pression d'un turboréacteur d'avion selon l'invention,
- la figure 2A est une vue schématique en coupe longitudinale du carter externe utilisé dans le compresseur selon la figure 1,
- la figure 2B est une vue de détail montrant les moyens de fixation utilisés pour le carter selon la figure 2A.

### EXPOSÉ DÉTAILLÉ DE MODES DE RÉALISATION PARTICULIERS

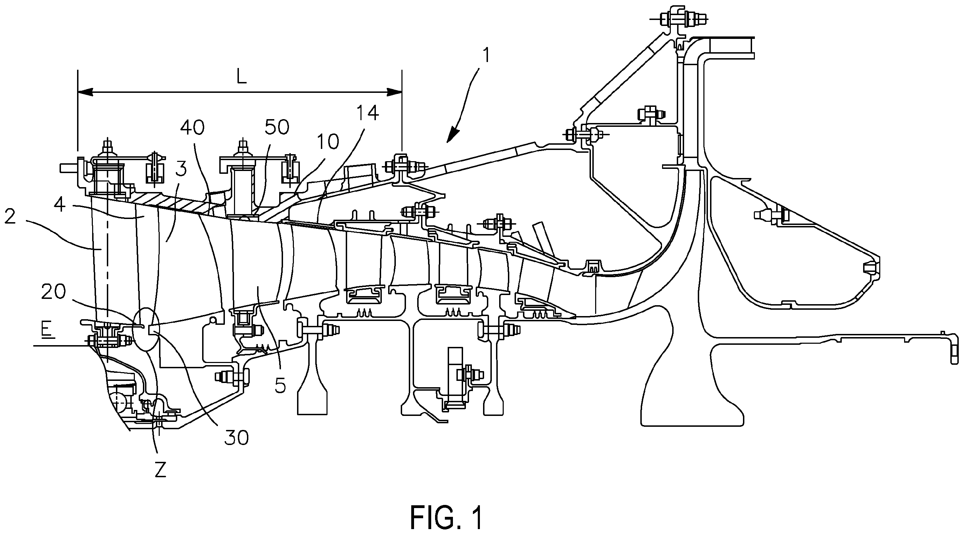

Sur la figure 1, on a représenté un compresseur haute-pression 1 d'un turboréacteur de nouvelle génération, c'est-à-dire à fortes pressions à l'entrée E.

Ce type de compresseur 1 comprend une première rangée d'aubes fixes 2 de redressement du gaz en amont d'une première rangée d'aubes mobiles 3. Toutes les aubes 2, 3 sont réalisées en titane ou alliage de titane. Lors du fonctionnement du turboréacteur, il subsiste un risque de contact sévère par frottement entre le pied 20 des aubes fixes 2 et le pied 30 des aubes mobiles 3 dans la zone Z illustrée en figure 1.

Ce risque de contact sévère par frottement peut conduire à la mise en combustion du titane dans cette zone Z. Il faut alors éviter que des particules de titane en combustion viennent propager la combustion au carter externe 10. En effet, de telles particules peuvent être expulsées dans la veine des gaz 4 et en conséquence venir en contact avec le carter externe 10. Le risque de contact est plus grand avec la partie amont de celui-ci 10 qui s'étend sur une certaine longueur L. Cette longueur L est la distance entre deux points dont l'un marque l'inversion des pentes dans le profil du carter et l'autre est un plan de joint avec la structure aval du compresseur HP qui devient une structure en superalliage en veine gazeuse.

Si ce carter externe 10 est constitué exclusivement en titane ou en alliage de titane, un feu de titane peut donc être créé et donc se propager à l'ensemble des autres pièces constituant le turboréacteur.

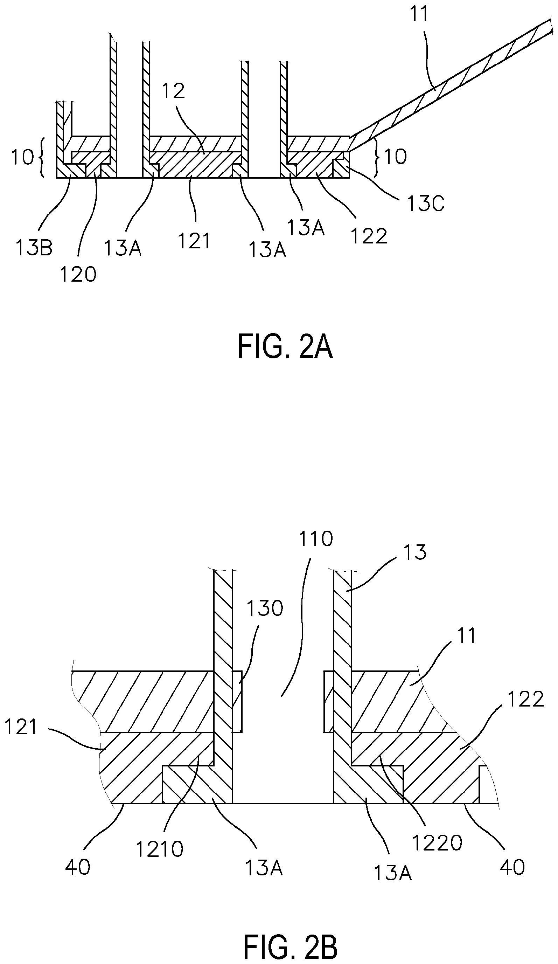

Pour éviter cela, selon l'invention, on réalise un carter externe 10 en deux parties 11, 12, dont une partie 11 est une pièce monobloc en titane ou alliage de titane et dont l'autre partie 12 est constituée par une pluralité de profilés 120, 121, 122 en acier ou alliage(s) réfractaire(s) formant des boucliers et incombustible au titane en combustion (figure 2A). La pluralité de profilés 120, 121, 122 en acier ou alliage(s) réfractaire(s) incombustible au titane en combustion constitue ainsi en quelque sorte un bouclier de protection anti feu à la structure porteuse contre n'importe quelle particule du titane en combustion susceptible de venir dans cette partie L du carter 10.

Selon l'invention, les profilés 120, 121, 122 sont solidarisés à la pièce monobloc par des moyens de fixation 13. L'agencement de ces derniers 13 avec les profilés 120, 121, 122 est prévu de manière à définir ensemble la paroi interne 10 délimitant le contour externe 40 de la veine de compresseur 4.

Dans le mode de réalisation illustré, la partie formant structure porteuse 11 est réalisée à partir d'un brut forgé ou d'une fonderie en alliage de titane. Les profilés métalliques 120, 121, 122 sont réalisés dans des tôles en alliage à bas coefficient de dilatation tel que l'inconel 909 ou le 783.

Sur la figure 2B, on a représenté plus précisément des moyens de fixation 13 de deux profilés 121, 122 consécutifs constituant le bouclier de protection anti feu de titane. Ainsi, la fixation des tôles 121, 122 en acier ou en alliage(s) réfractaire(s) incombustible au feu de titane est réalisée de la manière suivante.

Chaque profilé 121, 122 a une forme en coupe axiale sensiblement en forme de T et définit ainsi chacun deux gorges concentriques de préférence obtenues par usinage. On réalise un sertissage simultanément des deux profilés 121, 122 par l'intermédiaire d'une rangée de bossages 13 à collerettes 13A répartis uniformément sur la circonférence annulaire qui sont sertis individuellement dans un alésage 110 pratiqué dans le brut forgé de la structure en titane ou alliage de titane 11. Le sertissage de chaque bossage 13 est réalisé par une bague sertie 130, de préférence selon un procédé par expansion à froid de type FTI®. Ainsi, une des gorges concentriques 1210 d'un des profilés 121 et une des gorges concentriques 1220 du profilé 122 agencé immédiatement en aval sont serties par une même rangée de bossages 13 (figure 2B). Les bossages à collerette utilisés 13 sont de préférence réalisés dans le même alliage que celui du bouclier ou en Hastelloy®X ou en acier A286 pour les douilles de guidage des aubes à calage variable. Tel que représenté, la fixation du bouclier 121 est réalisée par accrochage des branches du T avec deux collerettes orientées 13A différemment, l'une vers l'amont et l'autre vers l'aval (figure 2A). De manière avantageuse, la fixation du bouclier 120 ou 122 est en outre réalisée par mise en butée axiale avec une partie d'une bride de fixation 13B usinée directement dans un autre carter en continuité. Dans la variante de réalisation, la partie 13B de la bride de fixation utilisée pour fixer le bouclier 120 est constituée par la bride de fixation du carter intermédiaire, non représenté, du compresseur haute-pression 1. La partie 13C de la bride de fixation utilisée pour bloquer en translation axiale le bouclier 122 peut être constituée par la bride de fixation du carter aval 14 du compresseur haute-pression 1.

Ainsi, selon l'invention, l'agencement des bossages 130 avec les profilés 121, 122 délimite le contour externe 40 de la veine de compresseur 4. Autrement dit, la fixation choisie permet judicieusement non seulement de fixer ensemble la structure porteuse en titane ou alliage de titane 11 aux boucliers 120, 121, 122 protecteurs thermiques contre le feu de titane mais de définir exactement le contour externe 40 de veine 4.

Selon une variante de fixation avantageuse, lorsque le compresseur haute-pression 1, comprend une rangée d'aubes à calage variable 5, le bossage à collerette 13 selon l'invention qui peut être utilisé est constitué par la douille de pivot 50 des dites aubes 5. Ainsi, dans le carter externe 10 représenté sur la figure 1, la troisième rangée d'aubes 5 est constituée par une rangée d'aubes fixes à calage variable dont les douilles de serrages constituent également des bossages à collerettes 13 selon l'invention, c'est-à-dire qui servent à fixer les boucliers 120, 121, 122.

Selon une variante de l'invention, l'interface entre la tôle acier ou alliage(s) réfractaire(s) 120, 121 ou 122 et la structure porteuse en titane ou alliage de titane 11 peut être traitée par oxydation anodique du titane pour éviter les risques de corrosion par frottement relatif entre ces pièces. Pour obtenir un tel effet anticorrosion, l'acier constituant les boucliers 120, 121 ou 122 peut avantageusement être lui même revêtu d'une peinture par exemple à pigment aluminium face au titane oxydé anodique.

Le carter externe 10 ainsi constitué permet de conserver une structure porteuse 11 en alliage de titane (Ti 6 4 ,6242 ou 6246, par exemple) protégée des risques de feu de titane par la tôle 12, elle même fixée par des bossages sertis 13, simplifiant ainsi l'assemblage et les usinages des bandeaux externes 120, 121, 122.

L'invention telle que décrite permet de :
A) protéger la veine des compresseurs haute-pression grâce à un alliage incombustible au feu de titane,
B) réaliser la partie externe ou structure porteuse avec un alliage de titane hors de la zone potentiellement concernée par le feu de titane,
C) conserver une masse bien inférieure par rapport à des solutions de carter réalisées complètement en acier ou alliage(s) réfractaire(s). Par exemple, il est permis d'envisager un carter externe 10 d'épaisseur moyenne de 1,5mm, utilisant comme profilés 12 des tôles en Inconel® 909, tel que réalisé sur la longueur L dans le mode de réalisation illustré, ayant un poids moindre d'environ 10 kg par rapport à un carter de forme et de dimensions identiques réalisé totalement en acier ou en alliage(s) réfractaire(s). Ainsi, la masse volumique « moyenne » du carter selon l'invention est équivalente à celle d'un carter en alliages dérivés du titane réputés anti feu.

## Revendications

1. Carter (10) comprenant au moins une partie constituant la structure porteuse de rangées d'aubes fixes et une paroi interne délimitant le contour externe (40) d'une veine (4) de compresseur (1) dans laquelle sont montées en rotation des rangées d'aubes mobiles (3) intercalées individuellement avec les rangées d'aubes fixes (2) ou à calage variable et, des moyens de protection thermique contre du titane en combustion **caractérisé en ce qu'**il comprend sur au moins une partie de sa longueur, en tant que structure porteuse, une pièce monobloc (11) en titane ou alliage de titane et, en tant que moyens de protection thermique, au moins un élément formant bouclier (12, 120, 121, 122) en un alliage réfractaire et incombustible au titane en combustion, le (s) bouclier(s) étant solidarisé(s) à la pièce monobloc par des moyens de fixation (13, 130), ces derniers étant agencés avec le(s) bouclier(s) de manière à définir ensemble la paroi interne délimitant le contour externe (40) de la veine (4) de compresseur.

2. Carter (10) selon la revendication précédente, **caractérisé en ce que** l'alliage réfractaire et incombustible au titane en combustion est un alliage d'acier choisi parmi l'acier 17-4 PH, l'acier Z 12 CNDV 12, l' Inconel 909, l' Inconel 783 ou l'alliage JETHETE M 152.

3. Carter (10) selon la revendication 1 ou 2, **caractérisé en ce que** l'alliage de titane est choisi parmi le Ti 6 4, Ti 6242 ou Ti 6246.

4. Carter (10) selon l'une des revendications précédentes, **caractérisé en ce qu'**il comprend au moins une couche de matériau anticorrosion intercalée entre chaque bouclier en acier ou en alliage réfractaire et incombustible au titane en combustion et la pièce monobloc en titane ou alliage de titane.

5. Carter (10) selon l'une quelconque des revendications précédentes, **caractérisé en ce qu'**un bouclier a une longueur correspondant seulement à une partie de la longueur annulaire du carter.

6. Carter (10) selon l'une des revendications précédentes, **caractérisé en ce qu'**en aval de la longueur sur laquelle est fixée le(s) bouclier(s) ou sur le diamètre interne du (des) bouclier(s), un matériau d'usure adapté pour définir le contour externe de la veine est fixé ou déposé.

7. Carter (10) selon l'une des revendications précédentes, **caractérisé en ce que** le(s) bouclier(s) (120, 121, 122) a (ont), selon une coupe axiale au carter, une forme en T.

8. Carter (10) selon la revendication 7, **caractérisé en ce que** les moyens de fixation comprennent un ou plusieurs bossages (13) à collerette fixé(s) individuellement dans des alésages (110) pratiqués dans la pièce monobloc (11) en titane ou alliage de titane et dans des alésages pratiqués dans le(s) bouclier(s), la fixation de chaque bossage étant réalisée pour assurer une continuité de surface avec le(s) bouclier(s) afin d'assurer la continuité du contour externe (40) de la veine (4).

9. Carter (10) selon la revendication 8, **caractérisé en ce qu'**au moins une partie des bossages est constituée par des douilles de guidage (50) de pivot d'aube à calage variable (5)

10. Carter (10) selon la revendication 8 ou 9, caractérisé en que les bossages sont des bossages sertis individuellement dans les alésages (110) de la pièce monobloc (11).

11. Carter (10) selon la revendication 10, **caractérisé en ce que** les bossages sont des bossages sertis à froid.

12. Carter (10) selon l'une des revendications 8 à 11, **caractérisé en ce que** les bossages sont réalisés en Hastelloy X ou acier A 286 ou dans l'alliage du(es) bouclier(s).

13. Carter (10) selon l'une des revendications précédentes, **caractérisé en ce qu'**il comprend des moyens de blocage en translation axiale du(es) bouclier(s) supplémentaires aux moyens de fixation qui consistent en une partie d'une bride de fixation usinée directement dans un autre carter agencé en continuité contre laquelle une partie du(es) bouclier(s) est en butée axiale.

14. Compresseur axial haute-pression (1) comprenant, en tant que stator, un carter (10) selon l'une quelconque des revendications précédentes.

15. Compresseur haute-pression (1) selon la revendication précédente, **caractérisé en ce que** la longueur du carter (L) constitue uniquement la partie amont (10) du compresseur, la paroi interne (14) délimitant le contour externe (40) de la veine (4) en aval étant réalisée en titane ou alliage de titane.

16. Moteur d'aéronef comprenant un compresseur selon l'une des revendications 14 ou 15.

## Patentansprüche

1. Gehäuse (10), welches mindestens einen Teil aufweist, der die Tragkonstruktion für Reihen von Statorschaufeln bildet, sowie eine Innenwand, die die Außenkontur (40) einer Strömungsbahn (4) eines Kompressors (1) bildet, in der drehbar Reihen von Rotorschaufeln (3) eingebaut sind, die jeweils abwechselnd mit den Reihen von Statorschaufeln (2) oder Schaufeln mit variabler Anstellung angeordnet sind, sowie Mittel zum Wärmeschutz gegen brennendes Titan,
**dadurch gekennzeichnet,**
**dass** es über mindestens einen Teil seiner Länge als Tragkonstruktion ein einstückiges Teil (11) aus Titan oder einer Titanlegierung aufweist und als Mittel zum Wärmeschutz mindestens ein einen Schutzschild (12, 120, 121, 122) bildendes Element aus einer feuerfesten und durch brennendes Titan nicht verbrennbaren Legierung aufweist, wobei der (die) Schutzschild(e) mit dem einstückigen Teil durch Befestigungsmittel (13, 130) fest verbunden ist (sind), wobei letztere mit dem (den) Schutzschild(en) dergestalt ausgeführt sind, dass sie zusammen die Innenwand bilden, die die Außenkontur (40) der Strömungsbahn (4) des Kompressors bildet.

2. Gehäuse (10) nach dem vorherigen Anspruch,
**dadurch gekennzeichnet,**
**dass** die feuerfeste und durch brennendes Titan nicht verbrennbare Legierung eine Stahllegierung ist, die unter 17-4 PH-Stahl, Z 12 CNDV 12 - Stahl, Inconel 909, Inconel 783 oder der Legierung JETHETE M 152 gewählt wird.

3. Gehäuse (10) nach Anspruch 1 oder 2,
**dadurch gekennzeichnet,**
**dass** die Titanlegierung unter Ti 6 4, Ti 6242 oder Ti 6246 gewählt wird.

4. Gehäuse (10) nach einem der vorherigen Ansprüche,
**dadurch gekennzeichnet,**
**dass** es mindestens eine Schicht aus Korrosionsschutzmaterial aufweist, die zwischen jedem Schutzschild aus Stahl oder aus einer feuerfesten und durch brennendes Titan nicht verbrennbaren Legierung und dem einstückigen Teil aus Titan oder Titanlegierung angebracht wird.

5. Gehäuse (10) nach einem der vorherigen Ansprüche,
**dadurch gekennzeichnet,**
**dass** ein Schutzschild eine Länge hat, die nur einem Teil der Ringlänge des Gehäuses entspricht.

6. Gehäuse (10) nach einem der vorherigen Ansprüche,
**dadurch gekennzeichnet,**
**dass** in Strömungsrichtung hinter der Länge, über die der (die) Schutzschild(e) befestigt ist (sind), oder über den Innendurchmesser des (der) Schutzschildes(e) ein Verschleißmaterial befestigt oder aufgebracht wird, das geeignet ist, die Außenkontur der Strömungsbahn zu bilden.

7. Gehäuse (10) nach einem der vorherigen Ansprüche,
**dadurch gekennzeichnet,**
**dass** der (die) Schutzschild(e) (120, 121, 122) in einem axialen Schnitt durch das Gehäuse T-förmig ist (sind).

8. Gehäuse (10) nach Anspruch 7,
**dadurch gekennzeichnet,**
**dass** die Befestigungsmittel aus einem oder mehreren Vorsprüngen (13) mit Flansch bestehen, der (die) einzeln in Bohrungen (110), die in dem einstückigen Teil (11) aus Titan oder Titanlegierung ausgeführt sind, sowie in Bohrungen, die in dem (den) Schutzschild(en) ausgeführt sind, befestigt ist (sind), wobei die Befestigung jedes Vorsprungs so ausgeführt ist, dass eine Oberflächenkontinuität mit dem (den) Schutzschild(en) gewährleistet wird, um die Kontinuität der Außenkontur (40) der Strömungsbahn (4) zu gewährleisten.

9. Gehäuse (10) nach Anspruch 8,
**dadurch gekennzeichnet,**
**dass** mindestens ein Teil der Vorsprünge von Führungshülsen (50) für Drehzapfen von Schaufeln mit variabler Anstellung (5) gebildet wird.

10. Gehäuse (10) nach Anspruch 8 oder 9,
**dadurch gekennzeichnet,**
**dass** die Vorsprünge einzeln in die Bohrungen (110) des einstückigen Teils (11) gequetschte Vorsprünge sind.

11. Gehäuse (10) nach Anspruch 10,
**dadurch gekennzeichnet,**
**dass** die Vorsprünge kalt gequetschte Vorsprünge sind.

12. Gehäuse (10) nach einem der Ansprüche 8 bis 11,
**dadurch gekennzeichnet,**
**dass** die Vorsprünge aus Hastelloy X oder A 286 Stahl oder in der Legierung des (der) Schutzschildes(e) ausgeführt sind.

13. Gehäuse (10) nach einem der vorherigen Ansprüche,
**dadurch gekennzeichnet,**
**dass** es zusätzlich zu den Befestigungsmitteln Sperrmittel für den (die) Schutzschild (e) in axialer Vorschubrichtung aufweist, welche aus einem Teil eines Befestigungsflanschs bestehen, der direkt in einem weiteren, in Kontinuität angebauten Gehäuse ausgeführt ist, und an dem ein Teil des (der) Schutzschildes(e) in axiale Anlage kommt.

14. Axialer Hochdruckkompressor (1), der als Stator ein Gehäuse (10) nach einem der vorherigen Ansprüche aufweist.

15. Hochdruckkompressor (1) nach dem vorherigen Anspruch,
**dadurch gekennzeichnet,**
**dass** die Länge des Gehäuses (L) nur den in Strömungsrichtung vorderen Teil (10) des Kompressors bildet, wobei die Innenwand (14), die die Außenkontur (40) der Strömungsbahn (4) in Strömungsrichtung hinten bildet, aus Titan oder einer Titanlegierung ausgeführt ist.

16. Flugzeugtriebwerk, das einen Kompressor nach einem der Ansprüche 14 oder 15 aufweist.

## Claims

1. A housing (10) including at least one part constituting the structure holding the rows of stator blades and an inner wall demarcating the outer contour (40) of a compressor (1) airstream (4) in which are assembled rows of rotating rotor blades (3) individually sandwiched between the rows of stator (2) or variable pitch blades, and means for thermal protection against burning titanium wherein it comprises over at least one part of its length, as a load-bearing structure, a single-cast part (11) made from titanium or titanium alloy and, as means of thermal protection, at least one element forming a shield (12, 120, 121, 122) made from refractory alloy(s) and incombustible in the presence of burning titanium, where the shield(s) is (are) secured to the single-cast part by fasteners (13, 130), where the latter are positioned with the shield(s) so as to define together the inner wall demarcating the outer contour (40) of the compressor airstream (4).

2. A housing (10) according to the preceding claim, wherein the refractory alloy which is incombustible in the presence of burning titanium is a steel alloy chosen from among 17-4 PH steel, Z 12 CNDV 12 steel, Inconel 909, Inconel 783 or the alloy JETHETE M 152.

3. A housing (10) according to claims 1 or 2, wherein the titanium alloy is chosen from among Ti 6 4, Ti 6242 or Ti 6246.

4. A housing (10) according to any one of the preceding claims, wherein it includes at least one layer of anti-corrosion material sandwiched between each shield made from refractory steel or alloy and incombustible in the presence of burning titanium and the single-cast part made from titanium or titanium alloy.

5. A housing (10) according to any one of the preceding claims, wherein the length of a shield corresponds only to a part of the annular length of the housing.

6. A housing (10) according to any one of the preceding claims, wherein downstream from the length on to which is attached the shield (s) or on the inner diameter of the shield(s), a wear material suitable for defining the outer contour of the airstream is attached or applied.

7. A housing (10) according to any one of the preceding claims, wherein the shield(s) (120, 121, 122) has (have), according to an axial section in the housing, a T shape.

8. A housing (10) according to claim 7, wherein the fasteners include one or more flanged bosses (13) attached individually in the bores (110) made in the single-cast titanium or titanium alloy part (11), and in bores made in the shield(s), where the fastener of each boss is made to provide surface continuity with the shield (s) in order to ensure the continuity of the outer contour (40) of the airstream (4).

9. A housing (10) according to claim 8, wherein at least a part of the bosses is constituted by guide bushings (50) of variable pitch blade pivots (5).

10. A housing (10) according to claim 8 or 9, wherein the bosses are bosses crimped individually in the borings (110) of the single-cast part (11).

11. A housing (10) according to claim 10, wherein the bosses are cold-crimped bosses.

12. A housing (10) according to any one of claims 8 to 11, wherein the bosses are made from Hastelloy X or A 286 steel or from the alloy of the shield(s).

13. A housing (10) according to any one of the preceding claims, wherein it includes means for blocking the axial translation of the additional shield (s) by fasteners which consist of a part of an attachment flange machined directly in another housing extending in uninterrupted fashion, against which part of the shield(s) is (are) in axial abutment.

14. A high-pressure axial compressor (1) including, as a stator, a housing (10) according to any one of the preceding claims.

15. A high-pressure compressor (1) according to the preceding claim, wherein the length of the housing (L) constitutes only the upstream part (10) of the compressor, and where the inner wall (14) demarcating the outer contour (40) of the downstream airstream (4) is made from titanium or titanium alloy.

16. An aircraft engine including a compressor according to claims 14 or 15.
